Europäisches Patentamt

European Patent Office

Office européen des brevets

(19)

(11)  EP 0 915 929 B1

(12)      FASCICULE DE BREVET EUROPEEN

(45) Date de publication et mention
de la délivrance du brevet:
**19.09.2001  Bulletin 2001/38**

(21) Numéro de dépôt: **97935652.4**

(22) Date de dépôt: **29.07.1997**

(51) Int Cl.$^7$: **C08J 3/22**

(86) Numéro de dépôt international:
**PCT/FR97/01418**

(87) Numéro de publication internationale:
**WO 98/04617 (05.02.1998 Gazette 1998/05)**

(54) **MELANGES MAITRES CONTENANT DES AGENTS DE VULCANISATION**

VULKANISATIONSMITTEL ENTHALTENDE MASTERBATCHES

MASTERBATCHES CONTAINING VULCANISING AGENTS

(84) Etats contractants désignés:
**AT BE CH DE DK ES FI FR GB GR IE IT LI LU NL
PT SE**
Etats d'extension désignés:
**AL LT LV RO SI**

(30) Priorité: **29.07.1996  FR 9609502**

(43) Date de publication de la demande:
**19.05.1999  Bulletin 1999/20**

(73) Titulaire: **Atofina**
**92800 Puteaux (FR)**

(72) Inventeurs:
• **BONHOMME, Dominique**
**F-64320 Hidron (FR)**
• **PFRENGLE, Walter**
**D-55442 Stromberg (DE)**

• **EL BOUNIA, Nour, Eddine**
**F-64300 Orthez (FR)**
• **PIERROT, Jean-Michel**
**27170 Grosley-sur-Risle (FR)**

(74) Mandataire: **Neel, Henry**
**Atofina**
**D.C.R.D./D.P.I.**
**4, Cours Michelet,**
**La Défense 10**
**92091 Paris La Défense Cedex (FR)**

(56) Documents cités:
**EP-A- 0 277 598          FR-A- 2 139 409**
**GB-A- 1 126 017          GB-A- 2 141 719**

• **PATENT ABSTRACTS OF JAPAN vol. 016, no.
496, 14 octobre 1992 & JP 04 183732 A (SANSHIN
CHEM IND CO LTD), 30 juin 1992,**

**Description**

La présente invention concerne des mélanges maîtres contenant des agents de vulcanisation et plus particulièrement des mélanges maîtres thermoplastiques ayant pour support des copolymères de l'éthylène et d'au moins un ester d'acide carboxylique insaturé. Ils sont utiles par exemple pour introduire des agents de vulcanisation dans des élastomères. Elle concerne aussi un procédé de préparation de mélanges maîtres contenant des agents de vulcanisation et ayant pour support des copolymères thermoplastiques de l'éthylène.

Les élastomères vulcanisés résultent du mélange d'un élastomère tel que par exemple un copolymère styrène-butadiène avec des charges, des plastifiants, des antioxydants, un agent de vulcanisation, un ou plusieurs accélérateurs, éventuellement un activateur, puis ce mélange est mis en forme et chauffé pour provoquer la vulcanisation qui est une réaction de réticulation.

Les agents de vulcanisation, accélérateur, activateur, antioxydants, sont utilisés à des doses relativement faibles si on les compare aux autres ingrédients (charges, plastifiants). Comme leur rôle est fondamental dans la réaction de réticulation, il est nécessaire que leur répartition dans le mélange à vulcaniser soit optimale. Pour cela, il est avantageux d'introduire ces produits dans le mélange sous forme de mélange maitres.

En règle générale, ces mélanges maitres utilisent comme support un élastomère tel qu'un EPDM (copolymère éthylène-propylène-diène), un EPR (copolymère éthylène-propylène), un SBR (copolymère-styrène-butadiène), ou un NBR (copolymère nitrile-butadiène).

Par définition, ces mélanges maîtres sont très chargés en additifs. Il est nécessaire de choisir comme support un polymère qui puisse se disperser facilement dans le mélange à vulcaniser.

Il est donc avantageux que ce support ait une affinité avec les mélanges à vulcaniser.

Ces mélanges maitres se présentent en général sous forme de bandes ou de granulés. L'une des difficultés rencontrées dans leur utilisation réside dans leur tendance à s'agglomérer au cours du stockage. Ce phénomène est dû au collant manifesté par le support aux températures habituelles de stockage. Cette agglomération empêche souvent l'utilisation du produit dans les installations usuelles de transport et pesées automatiques qui équipent les ateliers de mélange.

Selon l'art antérieur on remédie à cet inconvénient par addition d'agent anti collant, par exemple le talc, ajouté par pulvérisation au moment de la granulation ou de la confection des bandes de mélange maître. Ce procédé a pour inconvénient d'introduire un produit supplémentaire qu'il est toujours difficile de repandre de façon régulière.

La demanderesse a maintenant trouvé que des mélanges maîtres ayant pour support des copolymères de l'éthylène et d'esters d'acides carboxyliques insaturés avaient de nombreux avantages :

Ces polymères de l'éthylène grâce à leur polarité se dispersent facilement dans la plupart des polymères ; ils ont un point VICAT faible qui facilite la dispersion du mélange maître, enfin à la température ambiante le mélange maître est solide et non collant ce qui empêche toute agglomération au stockage quelle que soit la présentation sous forme de bande ou de granulé et ceci avec éventuellement l'addition de faibles quantités d'agent antiadhérent tel que par exemple le talc. En utilisant les mélanges maîtres de la présente invention pour vulcaniser des élastomères on n'observe pas de dégradation des propriétés des caoutchoucs vulcanisés par rapport aux caoutchoucs vulcanisés avec les mélanges maîtres de l'art antérieur.

La présente invention concerne des mélanges maîtres thermoplastiques ayant pour support au moins un copolymère (A) de l'éthylène et d'au moins un ester d'acide carboxylique insaturé et comprenant des agents de vulcanisation.

A titre d'exemple, on peut citer :

- les systèmes de vulcanisation au soufre constitués de soufre associé aux accélérateurs de vulcanisation tels que les sels métalliques de dithiocarbamates (diméthyl dithiocarbamate de zinc, de tellure...), les mono di et tetrasulfures de thiurame (tetramethyl disulfure de thiurame...), les sulferamides, les dérivés de la morpholine, les guanidines.

Ces systèmes peuvent aussi contenir de l'oxyde de zinc associé éventuellement à de l'acide stéarique qui sont des activateurs de vulcanisation des élastomères dieniques,

- les systèmes de vulcanisation donneurs de soufre dans lesquels la majorité du soufre utilisé pour la réticulartion provient de molécules soufrées telles que les polysulfures de thiurames, le disulfure de mercaptobenzothiazole etc...,
- les systèmes de vulcanisation à base d'oxydes métalliques, particulièrement pour des élastomères halogénés (polychloroprène par exemple). Il s'agit notamment de l'oxyde de zinc,
- les systèmes de vulcanisation aux résines phénoliques constitués de résines formophénoliques difonctionnelles pouvant être halogénées et associées à des chlorures métalliques ou l'oxyde de zinc,

- les systèmes de vulcanisation aux peroxydes, dans lesquels tous les donneurs de radicaux libres peuvent être utilisés, par exemple le peroxyde de dicumyle, en association avec l'oxyde de zinc et l'acide stéarique,
- les vulcanisants à base de diamines (orthotoluidyl guanidine, diphénylguanidine...) ou de diamines bloquées telles que le carbamate d'hexaméthylène diamine,
- les systèmes d'accélération à base de dérivés de la thiourée comme l'éthylthiourée ou la diethylthiourée.

Les mélanges maîtres de l'invention peuvent en plus contenir un ou plusieurs des produits suivants :

- des anti oxydants,
- des anti ozonants,
- des absorbeurs d'ultraviolets,
- des agents gonflants,
- du noir de carbone.

Les mélanges maîtres pourraient ne contenir qu'une partie du système de vulcanisation tel que le soufre et on ajouterait l'accélérateur séparément dans l'élastomère.

On ne sortirait pas du cadre de l'invention si les mélanges maîtres contenaient aussi les autres additifs habituels des élastomères à vulcaniser tels que les plastifiants, le noir de carbone, la silice, le carbonate, le talc, les ignifugeants. Ces additifs représentent souvent des quantités du même ordre de grandeur ou plus importantes que l'élastomère, lui-même et sont toujours en quantités beaucoup plus importantes que le système de vulcanisation. Un tel mélange maître n'aurait aucun sens. Cependant, les mélanges maîtres de l'invention peuvent contenir un peu de plastifiant ainsi qu'il sera expliqué plus loin.

Les élastomères à vulcaniser peuvent être par exemple le caoutchouc naturel, le polyisoprène, le SBR, le NBR, l'EPDM, le polychloroprène, le caoutchouc butyle ou les polyéthers tels que les caoutchoucs épychlorhydrine.

S'agissant du copolymère (A), les esters peuvent provenir de la réaction d'un acide carboxylique insaturé avec un monoalcool ayant de 1 à 24 atomes de carbone. A titre d'exemple, on peut citer les (méth)acrylates d'alkyle dont l'alkyle a de 1 à 24 atomes de carbone. Des exemples d'acrylate ou de méthacrylates sont le méthacrylate de méthyle, l'acrylate d'éthyle, l'acrytate de n-butyle, l'acrylate d'isobutyle et l'acrylate de 2-éthylhexyle. Ces esters peuvent être introduites dans A par greffage (sur des polyéthylènes) ou par copolymérisation directe.

La quantité d'additifs (c'est-à-dire d'agents de vulcanisation et d'autres produits éventuels) peut être de 50 à 90 % en poids du mélange maître. Avantageusement cette quantité est de 80 à 90 %. La densité des mélanges maîtres peut être ainsi entre 1,1 et 5,5.

Avantageusement, le copolymère (A) est tel que le mélange maître est solide et non collant à la température ambiante et plastique aux températures de mise en oeuvre, c'est-à-dire au cours du mélange avec le polymère et les autres additifs qu'on ajoute dans le polymère en plus du mélange maître. Cette température peut varier avec la nature du polymère et des additifs ; on ne peut pas en règle générale effectuer le mélange de l'élastomère et de tous ses additifs, y compris le mélange maître de l'invention, au-dessus de 100 ou 110° C sans risquer de provoquer un début de vulcanisation.

Les mélanges maîtres de l'invention sont plastiques, avantageusement à des températures supérieures à 80 ou 90°C. On peut ainsi les disperser dans les polymères tout en restant dans un domaine ou il n'y a pas par exemple de risque de prévulcanisation.

A titre d'exemple, la viscosité MOONEY ML 1 + 4 à 50° C des mélanges maîtres est comprise entre 15 et 25.

Le mélange maître peut comprendre un plastifiant tel que par exemple une huile parafinique ou naphténique pour faciliter l'incorporation des additifs et/ou ajuster la viscosité.

La demanderesse a trouvé que pour que le mélange maître respecte les conditions ci-dessus, à savoir solide à la température ambiante et plastique aux températures de mise en oeuvre, il était avantageux de choisir un copolymère (A) ayant au moins soit la température de fusion soit la température de transition vitreuse, soit le point VICAT au dessus de la température ambiante et en dessous de la température de mélange avec le polymère dans lequel on ajoute le mélange maître. De préférence on choisit un copolymère (A) ayant une température de fusion d'environ 50 à 120° C son point VICAT peut être inférieur à 50° C.

On peut utiliser un mélange de copolymères (A) même si aucun, un ou plusieurs ne respecte pas les conditions ci-dessus pourvu que le mélange maître possède les caractéristiques citées plus haut.

De préférence, (A) est un copolymère éthylène-(méth)acrylate d'alkyle contenant jusqu'à 50 % en poids de (méth)acrylate et de préférence 20 à 40 %. Ces polymères peuvent être des copolymères statistiques produits par catalyse radicalaire à haute pression, c'est-à-dire entre 500 et 3 000 bars.

Selon une autre forme de l'invention, le copolymère (A) peut comprendre d'autres monomères (M1) greffés ou polymérisés, à titre d'exemple de ces monomères, on peut citer :

- les acides carboxyliques insaturés par exemple ceux ayant de 2 à 20 atomes de carbone tels que les acides acrylique, méthacrylique, maléique, fumarique et itaconique ;
- les dérivés fonctionnels des acides précédents par exemple les anhydrides, les dérivés amides, les dérivés imides et les sels métalliques tels que les sels de métaux alcalins ;
- les epoxydes insaturés tels que par exemple le (méth)acrylate de glycidyle, l'allylglycidyléther, le vinylglycidyléther, le maléate de glycidyle, l'itaconate de glycidyle, le 2-cyclohexène-1-glycidyléther, le cyclohéxène-4,5-diglycidylcarboxylate, le cyclohéxène-4-glycidyl carboxylate, le 5-norbornène-2-méthyl-2-glycidyl carboxylate et l'endocis-bicyclo (2,2,1)-5-heptène-2,3-diglycidyl dicarboxylate.

Par exemple (A) peut être un copolymère éthylène-(méth)acrylate d'alkyle-anhydride maléique ou un copolymère éthylène -(méth)acrylate d'alkyle-méthacrylate de glycidyle.

Il peut comprendre jusqu'à 50 % en poids de (meth)acrylate et jusqu'à 10 % en poids d'anhydride ou de methacrylate de glycidyle.

Selon une autre forme de l'invention, le mélange maître peut comprendre un autre polymère (B) différent de (A) choisi parmi :

- les copolymères éthylène -ester d'acide carboxylique insaturé greffé ou copolymérisé avec un ou plusieurs des monomères (M1) cités plus haut à condition que ces copolymères soient différents de (A) ;
- les copolymères éthylène/esters vinyliques d'acides carboxyliques saturés pouvant être greffés ou copolymérisés avec au moins un monomère choisi parmi (M1) et les esters d'acides carboxyliques insaturés ;
- les polyoléfines homo ou copolymères pouvant être greffées avec un monomère choisi parmi (M1) et les esters d'acides carboxyliques insaturés ;
- les élastomères EPR (éthylène-propylène) ;
- les élastomères cités plus haut dans lesquels on ajoute les mélanges maîtres de l'invention ;
- les élastomère précédents greffés par (M1) et avantageusement l'anhydride maléique,
- les copolymères blocs styrène-butadiène-styrène (SBS), styrène-éthylène/butène-styrène (SEBS) et styrène-isoprène-styrène (SIS) éventuellement greffés.

Le polymère (B) est choisi de telle sorte que les mélanges maîtres de l'invention aient les propriétés citées plus haut.

Avantageusement, les mélanges maîtres de l'invention comprennent un copolymère (A) éthyiène/(méth) acrylate d'alkyle et un copolymère (B) éthylène/(méth)acrylate d'alkyle/anhydride maléique.

Le copolymère (B) peut comprendre jusqu'à 50 % en poids de (meth)acrylate d'alkyle et jusqu'à 10 % en poids d'anhydride maléique.

Les proportions de (A) et (B) peuvent être telles que (en poids)

$$\frac{I}{5} \leq \frac{A}{B} \leq \frac{10}{1}$$

et avantageusement 60 à 80 parties de (A) pour 20 à 40 parties de (B). Les mélanges maîtres de l'invention peuvent être fabriqués aussi bien par les techniques de l'industrie des caoutchoucs que celles de l'industrie des thermoplastiques. On peut ainsi utiliser les extrudeuses, les mélangeurs, les bivis, eventuellement homogénéiser sur cylindres. Les mélanges maîtres de l'invention peuvent être facilement filtrés, il s'agit de filtration par exemple à 500, 200 ou 140 μm selon les spécifications. C'est un avantage important de l'invention, dû au comportement thermoplastique et à l'absence de produit anti collant.

Avantageusement les mélanges maîtres de l'invention sont préparés sur des machines utilisées pour les thermoplastiques en particulier les extrudeuses mono ou bi-vis. On peut ainsi encore réduire ou même supprimer le talc et éventuellement ajouter des cires qui suppriment tout caractère collant. De plus le temps de séjour dans les extrudeuses est beaucoup plus faible que dans les malaxeurs ou les cylindres des appareils de l'industrie du caoutchouc ; on peut donc travailler un peu plus chaud ce qui permet d'utiliser des copolymères (A) à point de fusion plus élevé par exemple vers 110 ~ 120°C.

L'art antérieur FR 2139409 a décrit des mélanges maîtres contenant des agents de vulcanisation et ayant pour support des copolymères éthylène-acétate de vinyle (EVA). Ces mélanges maîtres sont fabriqués sur des cylindres et des granulateurs de l'industrie du caoutchouc. La demanderesse a découvert que ces mélanges maîtres pouvaient être fabriqués sur des machines utilisées pour les thermoplastiques telles que par exemple les extrudeuses mono ou bi-vis. Les avantages principaux sont :

- le caractère collant est de moindre importance pendant la fabrication

- on peut travailler un peu plus chaud (le temps de séjour est plus faible).

Ces mélanges maîtres à base d'EVA peuvent aussi contenir des anti oxydants et divers additifs comme ceux cités plus haut.

Ainsi l'invention est un procédé de préparation de mélanges maîtres contenant des agents de vulcanisation et ayant pour support soit au moins un copolymère (A) de l'éthylène et d'au moins un ester d'acide carboxylique insaturé soit au moins un copolymère de l'éthylène et d'un ester vinylique d'acide carboxylique saturé ledit procédé consistant à mélanger le support et les agents de vulcanisation dans une extrudeuse.

Le procédé de l'invention concerne aussi la préparation des mélanges maîtres à base du copolymère (A) qu'on a décrit plus haut.

Le procédé de l'invention concerne aussi les supports de mélanges maîtres à base de copolymère d'éthylène et d'ester vinylique d'acide carboxylique saturé (par exemple l'EVA) en mélange avec d'autres polymères thermoplastiques par exemple ceux cités dans les polymères (B) cités plus haut et qui sont différents du copolymère éthylène-ester vinylique d'acide carboxylique saturé et différents du copolymère (A).

## *Exemples*

Dans les exemples, on désigne par :

LOTRYL 1: un copolymère éthylène-acrylate de n-butyle de proportion en poids 65 / 35 de MFi.900 (190° C - 2,16 kg).

LOTRYL 2: un copolymère éthylène/acrylate de méthyle de proportion en poids 71/29 de MFi. 2 - 3,5.(190° C - 2,16 kg), le point de fusion est 61°C et VICAT <40°C.

LOTADER 1: un copolymère éthylène-acrylate d'éthyle-anhydride maléique de proportions en poids 91/6/3 et MFi. 200 (190° C -2,16kg), le point de fusion est 100°C et le VICAT 57°C.

LOTRYL 3: un copolymère éthylène-acrylate de butyle de proportion en poids 65/35 de MFI 40 (190°C - 2,16 kg) le point de fusion est 67°C et le VICAT <40°C.

LOTRYL 4: un copolymère éthylène-acrylate de méthyle de proportion en poids 65/35 de MFI 4, 5 / 6 le point de fusion est 50°C et le VICAT <40°C.

LOTRYL 5: un copolymère éthylène-acrylate de butyle de proportion en poids 65/35 de MFI 260/350 le point de fusion est 66°C et le VICAT <40°C.

MBTS: désigne le disulfure de mercapto benzothiazole

DPTU: désigne le diphénylthiourée

HUILE : désigne une huile de paraffine.

Les mélanges ont été préparés dans un mélangeur interne puis sur des cylindres suiveurs.

Les résultats sont reportés sur les tableaux 1 à 3 suivants. Les pourcentages sont en poids.

Tableau 1

| Composition en parties | 1 | 2 | 3 | 4 | 5 | 6 |
|---|---|---|---|---|---|---|
| **MBTS** | 75 | 75 | 80 | 75 | 75 | 75 |
| **Huile** | 10 | 10 | 10 | 12 | 10,5 | 11 |
| **Lotryl 1** | 1.75 | 5.25 | 1,75 | | | |
| **Lotryl 2** | 5.25 | | 3,25 | 5 | 6 | 5 |
| **Lotader 1** | | 1.75 | | | | |
| **Talc** | 5 | 5 | | 5 | 5,5 | 6 |

Tableau 1   (suite)

| Composition en parties | 1 | 2 | 3 | 4 | 5 | 6 |
|---|---|---|---|---|---|---|
| Stearine | 3 | 3 | 3 | 3 | 3 | 3 |
| Comportement sur le mélangeur interne | bon | bon | bon | bon | bon | bon |
| Comportement sur les cylindres suiveurs | bon | bon | bon | bon | bon | bon |
| Filtration | bonne | bonne | bonne | bonne | bonne | bonne |
| Viscosité MOONEY ML1 +4 (50°C) | 16,6-18,8 | 15,2-15,1 | 19,8-21,5 | 24,5-23,5 | 19,5-19,6 | 18,7-17-8 |

| Vulcanisant | N° | Polymère (A) | % (A) | Huile de parafine % | Stéarine % | Mélangeur interne |
|---|---|---|---|---|---|---|
| MBTS 80 % | 7 | Lotryl 2 | 9.6 | 8 | 2.4 | OK |
| DPTU 75 % | 8 | Lotryl 3 | 14.31 | 10.61 | | OK |
| DPTU 77 % | 9 | Lotryl 4 | 11.7 | 8.8 | 2.5 | très bon |
| DPTU 77 % | 10 | Lotryl 3 | 11.7 | 8.8 | 2.5 | bon |
| MBTS 80 % | 11 | Lotryl 4 | 12.5 | 5 | 2.5 | très bon |
| MBTS 80 % | 12 | Lotryl 5 | 17.5 | | 2.5 | bon |
| MBTS 80 % | 13 | Lotryl 5 | 15.5 | 2 | 2.5 | bon |

Tableau 2

| Vulcanisant | N° | T finale °C | Mélangeur cylindre | comportement à froid | ML 1 + 4 (50°C) | ML 4 (50°C) | Dureté shore A |
|---|---|---|---|---|---|---|---|
| MBTS 80 % | 7 | 56.8 | correct | mélange dur, cassant, ne s'effrite pas trop | 50 | >200 | 74/74 |
| DPTU 75 % | 8 | 58.8 | meilleur comportement + cohésif, non collant | mélange assez souple, mais cassant si déformation élevée | 35 | 37 | 52/54 |

| Vulcanisant | | Mélangeur cylindre | comportement à froid | ML 1 + 4 (50°C) | ML 4 (50°C) | Dureté shore A |
|---|---|---|---|---|---|---|
| DPTU 77 % | 9 | Travail sur cylindre impeccable temp. = 50°C | souplesse correcte non cassant non autocollant | 55.4 | - | 61 |
| DPTU 77 % | 10 | ne colle pas cohésion correcte temp. de travail adéquate de 50°C | ne colle pas sur lui-même très légère souplesse, cassant si déformation suffisante | 23.6 | - | 53 |
| MBTS 80 % | 11 | excellent comportement sur cylindre à 80°C ne colle pas bonne cohésion | bonne souplesse non cassant non autocollant | 57.9 | - | 75 |
| MBTS 80 % | 12 | le mélange ne colle plus à 50°C, cependant il est un peu dur à travailler | ne colle pas sur lui-même cassant | 57.4 | - | 84 |
| MBTS 80 % | 13 | ne colle pas se travaille correctement | ne colle pas sur lui-même légère souplesse, cassant si déformation suffisante | 54.4 | - | 76 |

**Tableau 2 (suite 1)**

EP 0 915 929 B1

On prépare des mélanges maîtres à 90 % en poids d'oxyde de zinc (Zno).
**Formule 1** selon l'invention :

| LOTRYL 2 | 4.4 % |
|----------|-------|
| HUILE | 4.6 % |
| STEARINE | 1 % |
| ZNO | 90 % |

**Formule 2** selon l'invention

| LOTRYL 5 | 4.4 % |
|----------|-------|
| HUILE | 4.6 % |
| STEARINE | 1 % |
| ZNO | 90 % |

On compare leur viscosité Mooney avec celle de formulations de l'art antérieur à base d'EPM ou de SBR.
Les résultats sont sur le tableau 3 ci-après :

Tableau 3

|  | 50°C | 80°C | 100°C |
|---|------|------|-------|
| **FORMULE 1** **90 % ZNO** | 64 | 14 | 8 |
| **FORMULE 2** **90 % ZNO** | 23 | 10 | 7 |
| **FORMULE 3 base EPM** **85 % ZNO** | 78 | 39 | 26 |
| **FORMULE 4 base SBR** **85 % ZNO** | 94 | 50 | 30 |

**Revendications**

1. Mélanges maîtres thermoplastiques ayant pour support au moins un copolymère (A) de l'éthylène et d'au moins un ester d'acide carboxylique insaturé et comprenant des agents de vulcanisation choisis parmi :

   - les systèmes de vulcanisation au soufre
   - les systèmes de vulcanisation donneurs de soufre
   - les systèmes de vulcanisation à base d'oxydes métalliques
   - les systèmes d'accélération à base de dérivés de la thiourée

   et dans lesquels le copolymère (A) à une température de fusion comprise entre 50 et 120° C.

2. Mélanges selon la revendication 1 comprenant aussi un ou plusieurs produits choisis parmi les antioxydants, les antiozonants, les absorbeurs d'ultra violets, les agents gonflants et le noir de carbone.

3. Mélanges selon l'une quelconque des revendications précédentes dans lesquels la quantité d'agents de vulcanisation et d'éventuels autres produits est de 50 à 90 % en poids du mélange maître.

4. Mélanges selon l'une quelconque des revendications précédentes dans lesquels le copolymère (A) est un copolymère éthylène -(méth)acrylate d'alkyle.

5. Mélanges selon l'une quelconque des revendications précédentes comprenant aussi un polymère (B) choisi parmi les copolymères éthylène/(méth)acrylate d'alkyle/anhydride maléique.

**Patentansprüche**

1. Thermoplastische Masterbatches, die als Träger mindestens ein Copolymeres (A) von Ethylen und mindestens einem ungesättigten Carboxylsäureester haben und Vulkanisationsmittel enthalten, die gewählt sind aus:

   - den Schwefel enthaltenden Vulkanisationssystemen
   - den Schwefel abgebenden Vulkanisationssystemen
   - den Vulkanisationssystemen auf Grundlage von Metalloxiden
   - den Beschleunigungssystemen auf Grundlage von Thioharnstoffderivaten

   und in denen das Copolymere (A) eine Schmelztemperatur zwischen 50 und 120 °C hat.

2. Gemische nach Anspruch 1, die ferner ein oder mehrere Produkte enthalten, die aus den Antioxidantien, den Antiozonantien, den Absorbern ultravioletter Strahlung, den Quellmitteln und Ruß gewählt sind.

3. Gemische nach irgendeinem der vorangehenden Ansprüche, in denen die Menge an Vulkanisationsmitteln und an möglichen anderen Produkten 50 bis 90 Gew.-% des Masterbatch beträgt.

4. Gemische nach irgendeinem der vorangehenden Ansprüche, in denen das Copolymere (A) ein Ethylen-Alkyl(meth) acrylat-Copolymeres ist.

5. Gemische nach irgendeinem der vorangehenden Ansprüche, die ferner ein Polymeres (B) enthalten, das aus den Ethylen/Alkyl(meth)acrylat/ Maleinsäureanhydrid-Copolymeren gewählt ist.

**Claims**

1. Thermoplastic masterbatches containing at least one copolymer (A) of ethylene and of at least one unsaturated carboxylic acid ester as support and comprising curing agents chosen from:

   - sulphur-containing curing systems
   - sulphur-donating curing systems
   - curing systems based on metal oxides
   - accelerator systems based on thiourea derivatives

   and in which the copolymer (A) has a melting point of between 50°C and 120°C.

2. Masterbatches according to Claim 1, also comprising one or more products chosen from antioxidants, anti-ozonizers, ultraviolet stabilizers swelling agents and carbon black.

3. Masterbatches according to either of the preceding claims, in which the amount of curing agents and of other optional products is from 50 to 90% by weight of the masterbatch.

4. Masterbatches according to any one of the preceding claims, in which the copolymer (A) is an ethylene/alkyl (meth) acrylate copolymer.

5. Masterbatches according to any one of the preceding claims, also comprising a polymer (B) chosen from ethylene/ alkyl (meth)acrylate/maleic anhydride copolymers.